# FASCICULE DE BREVET EUROPEEN

(11) **EP 0 796 909 B1**
(45) Date de publication et mention de la délivrance du brevet: **26.09.2001**
(21) Numéro de dépôt: 97400368.3
(22) Date de dépôt: 19.02.1997
(51) Int. Cl.: C10M 135/06

(54) **Procédé de sulfuration de corps gras insaturés par le soufre élémentaire en présence de composés amines**
Verfahren zur Schwefelung von ungesättigten Fetten mit elementarem Schwefel in Gegenwart von Aminverbindungen
Method for sulfurizing unsaturated fats with elemental sulfur in presence of amine compounds

(30) Priorité: 19.03.1996 FR 9603493
(43) Date de publication de la demande: 24.09.1997
(73) Titulaire: INSTITUT FRANCAIS DU PETROLE, 92502 Rueil-Malmaison (FR)
(72) Inventeur: Delfort, Bruno, 75005 Paris (FR); Lacome Thierry, 92500 Rueil Malmaison (FR); Born, Maurice, 92000 Nanterre (FR)

(56) Documents cités:
- EP-A- 0 258 168
- FR-A- 2 167 527
- GB-A- 588 353
- GB-A- 630 889
- US-A- 4 119 549
- US-A- 5 338 468

## Description

L'invention concerne un nouveau procédé d'obtention de produits soufrés à partir de compositions d'esters d'acides monocarboxyliques mono ou polyinsaturés et de monoalcools ou de polyols et les produits soufrés ainsi obtenus.

Les esters insaturés sont définis plus particulièrement comme formés entre au moins un acide monocarboxylique à chaîne aliphatique de 3 à 30 atomes de carbone comportant au moins une insaturation éthylénique et au moins un composé hydroxylé choisi parmi les monoalcools et les polyols.

Dans la demande de brevet français publiée sous le numéro FR-A-2 727 426, le déposant a déjà décrit un procédé de sulfuration d'hydrocarbures mono ou polyéthyléniques de 2 à 36 atomes de carbone et de 1 à 3 insaturations éthyléniques par réaction avec du soufre élémentaire en présence d'une alcanolamine, de morpholine ou l'un de ses dérivés, en présence ou en l'absence d'eau.

Dans la demande de brevet français publiée sous le numéro FR-A-2 734 566, le déposant a décrit la même réaction effectuée en présence de carbonate de guanidine et en présence d'eau.

On a maintenant découvert qu'il était possible de sulfurer de façon efficace et avantageuse des compositions d'esters insaturés, telle que définies plus haut, par réaction avec le soufre élémentaire en présence de composés à fonctions amines et d'eau.

Le procédé de l'invention peut être caractérisé plus particulièrement par le fait qu'il comprend la réaction d'une composition comprenant au moins un ester insaturé formé entre au moins un acide monocarboxylique à chaîne aliphatique de 12 à 22 atomes de carbone et comportant au moins une insaturation éthylénique et au moins un composé hydroxylé choisi parmi les monoalcools aliphatiques renfermant par exemple de 1 à 12 atomes de carbone et les polyols aliphatiques renfermant par exemple de 2 à 6 atomes de carbone, avec du soufre élémentaire, en présence d'un composé à fonction amine hydrosoluble, et en présence d'eau.

A titre d'esters insaturés utilisés comme produits de départ pour la fabrication selon l'invention, on peut citer plus particulièrement les mélanges d'esters du glycérol que constituent les corps gras naturels, huiles ou graisses animales ou végétales. Les corps gras considérés comprennent des mono-, di- et/ou tri-glycérides, c'est-à-dire des esters de glycérol dans lesquels ce dernier a un, deux ou trois groupement(s) hydroxyle(s) estérifié(s) par au moins un acide monocarboxylique aliphatique (acide gras) dont au moins une partie est éthyléniquement mono ou polyinsaturée.

On considère également les mélanges d'esters obtenus par transestérification des huiles ou graisses naturelles au moyen d'au moins un monoalcool aliphatique ayant par exemple de 1 à 12 atomes de carbone. Du fait que, dans les huiles ou graisses naturelles considérées, au moins une partie des chaînes aliphatiques correspondant aux acides gras comporte au moins une insaturation éthylénique, au moins une partie des esters du mélange obtenu par transestérification consistera en esters insaturés.

On peut encore considérer dans l'invention des esters synthétisés par estérification entre au moins un acide monocarboxylique à chaîne aliphatique éthyléniquement insaturée (mono ou polyinsaturé) et au moins un composé hydroxylé monoalcool ou polyol aliphatique, tel que défini plus haut.

On considérera encore les esters synthétisés par transestérification entre d'une part au moins un ester d'acide monocarboxylique à chaîne aliphatique éthyléniquement insaturée et de monoalcool ou de polyol aliphatique et d'autre part au moins un monoalcool ou un polyol différent.

Les composés à fonctions amines hydrosolubles mis en jeu dans le procédé de sulfuration de l'invention peuvent comprendre au moins une fonction amine primaire ou secondaire ; ils peuvent comprendre en outre une autre fonction, par exemple une fonction imine, alcool ou éther ; ils peuvent aussi consister en composés cycliques.

Parmi les composés à fonctions amines considérés, on peut citer plus particulièrement :
- les alcanolamines, telles que par exemple les mono-, di- et triméthanolamines, et les mono- di- et triéthanolamines ;
- la morpholine et ses dérivés;
- la pipéridine ;
- la pipérazine ; et
- le carbonate de guanidine.

Dans la réaction de préparation des produits soufrés de l'invention, on met en jeu une proportion de soufre élémentaire allant jusqu'à environ 200 g (soit environ 6 moles) par insaturation éthylénique dans la composition d'ester gras insaturé de départ.

La proportion de composé à fonction amine peut varier dans de larges limites. En particulier, elle peut être de 0,1 à 4 moles par mole de soufre utilisé. On remarque avec surprise que le composé à fonction amine peut être utilisé notamment en très faible proportion et qu'on n'en retrouve pas dans le produit soufré finalement obtenu. Aussi, on peut penser qu'il agit essentiellement comme promoteur de la sulfuration.

La proportion d'eau mise en jeu dans le milieu réactionnel peut varier largement et aller par exemple jusqu'à 20 moles par insaturation éthylénique de la composition d'ester gras de départ.

En général, la réaction est réalisée à une température de 50 à 200°C et le plus souvent de 90 à 160°C.

La pression, qui dépend de manière prépondérante de la tension de vapeur de l'eau et du composé aminé à la température de réaction, peut aller de la pression atmosphérique jusqu'à par exemple 20 bars.

Un avantage particulièrement intéressant du procédé de sulfuration de l'invention est qu'en fin de réaction la phase aqueuse contenant le composé à fonction amine après séparation du produit sulfuré recherché peut être réutilisée pour promouvoir une préparation subséquente, par simple ajout des réactifs : corps gras et soufre. On peut ainsi, en utilisant le même promoteur, (eau + composé à fonction amine), réaliser plusieurs préparations successives de produit sulfuré avec la même efficacité (sans perte d'activité du promoteur). Cette possibilité est particulièrement avantageuse lorsque le composé à fonction amine est cher et/ou lorsque son évacuation pose des problèmes liés à la protection de l'environnement.

Les produits de l'invention sont des produits liquides renfermant généralement de 1 à 30 %, le plus souvent de 5 à 25 %, en masse de soufre, les teneurs en soufre les plus courantes sont de 8 à 12% en masse. Ces produits sont limpides et homogènes, même aux teneurs en soufre les plus élevés. Leur coloration varie selon la nature de l'ester gras insaturé de départ et de la quantité de soufre fixée. Ils peuvent être de très peu ou peu colorés (c'est le cas par exemple pour les corps gras à insaturation principalement monoéthylènique) à très colorés (dans le cas par exemple des corps gras à insaturation principalement polyéthylènique).

Par ailleurs, les produits soufrés de l'invention sont solubles dans les huiles lubrifiantes, notamment dans des huiles minérales et synthétiques. De plus, ils sont pratiquement exempts d'azote.

Les teneurs en soufre des produits de l'invention leur confèrent des propriétés antiusure, extrême-pression et antioxydantes telles qu'ils peuvent être utilisés avantageusement comme additifs dans les huiles et graisses lubrifiantes, notamment dans la formulation d'huiles pour engrenages d'automobiles, d'huiles industrielles et d'huiles d'usinage ou de travail des métaux. Pour ces utilisations, on incorpore en général les produits de l'invention aux compositions lubrifiantes à des concentrations de 0,05 à 20 %, de préférence de 0,5 à 10 % en masse.

Dans l'art antérieur, on trouve décrite dans le brevet GB-A-588 353 la préparation de factices et d'huiles sulfurées par réaction de soufre élémentaire sur des corps gras insaturés en présence d'un promoteur consistant en une amine secondaire aliphatique ou alicyclique mais en l'absence d'eau. En particulier la diéthanolamine est employée dans la production d'huiles sulfurées utilisables comme constituants de lubrifiants extrême-pression ou d'huiles de coupe. Dans le procédé décrit, l'amine utilisée, qui a réagi avec le soufre élémentaire pour former le promoteur de sulfuration, reste dans le produit obtenu, ce qui entraîne notamment des inconvénients de toxicité pour les utilisateurs.

Les avantages de l'invention par rapport à ce procédé antérieur consistent principalement en l'obtention de produits soufrés pratiquement exempts d'azote, l'amine ou le dérivé sulfuré d'amine restant dans le milieu aqueux et non dans le corps gras sulfuré recherché.

De plus, la phase aqueuse contenant le promoteur est en général séparée et peut être réutilisée dans au moins une nouvelle préparation subséquente.

Les exemples suivants illustrent l'invention.

### Exemple 1

Dans un réacteur permettant d'opérer sous pression, on introduit 50 g d'un mélange d'esters d'acide gras d'indice d'iode égal à 110 g d'iode pour 100 g de produit, 7,25 g (0,0833 mole) de morpholine, 6,0 g (0,187 mole) de soufre et 45 g d'eau. On porte le milieu à la température de 130°C et on maintient, sous agitation, le milieu à cette température pendant 6 heures. Après retour à la température ambiante, on dilue le milieu avec 50 ml de n-heptane, puis on sépare par décantation la phase aqueuse et la phase organique. La phase aqueuse est conservée afin d'être utilisée lors de la réaction décrite dans l'exemple 2. Après séchage de la phase organique sur sulfate de sodium puis filtration, on procède à l'évaporation sous pression réduite du n-heptane et on obtient 55,6 g d'un produit liquide, limpide, soluble dans les huiles minérales et synthétiques, dont la teneur en soufre est de 10,7% en masse et dont la teneur en azote est inférieure à 0,1% en masse.

### Exemple 1A (comparatif)

On répète l'exemple 1 sans mettre en jeu d'eau. Ainsi, dans un réacteur permettant d'opérer sous pression, on introduit 50 g d'un mélange d'esters d'acide gras d'indice d'iode égal à 110 g d'iode pour 100 g de produit,7,25 g (0,0833 mole) de morpholine et 6,0 g (0,187 mole) de soufre. On porte le milieu à la température de 130°C et on maintient, sous agitation, le milieu à cette température pendant 6 heures. Après retour à la température ambiante, on dilue le milieu avec 50 ml de n-heptane. Après filtration, on procède à l'évaporation sous pression réduite du n-heptane et on récupère 61 g d'un produit liquide, soluble dans les huiles minérales, dont la teneur en soufre est de 9,4% en masse et dont la teneur en azote est de 1,8% en masse.

### Exemple 2

Dans un réacteur permettant d'opérer sous pression, on introduit 50 g d'un mélange d'esters d'acide gras d'indice d'iode égal à 110 g d'iode pour 100 g de produit (identique à celui utilisé lors de la réaction décrite dans l'exemple 1), l'intégralité de la phase aqueuse isolée lors de l'exemple 1 et 6,0 g (0,187 mole) de soufre. On porte le milieu à la température de 130°C et on maintient, sous agitation, le milieu à cette température pendant 6 heures. Après retour à la température ambiante, on dilue le milieu avec 50 ml de n-heptane, puis on sépare par décantation la phase aqueuse et la phase organique. La phase aqueuse est conservée afin d'être utilisée lors de la réaction décrite dans l'exemple 3. Après séchage de la phase organique sur sulfate de sodium puis filtration, on procède à l'évaporation sous pression réduite du n-heptane et on obtient 55,2 g d'un produit liquide, limpide, soluble dans les huiles minérales et synthétiques, dont la teneur en soufre est de 10,6% en masse et dont la teneur en azote est inférieure à 0,1% en masse.

### Exemple 3

Dans un réacteur permettant d'opérer sous pression, on introduit 50 g d'un mélange d'esters d'acide gras d'indice d'iode égal à 110 g d'iode pour 100 g de produit (identique à celui utilisé lors de la réaction décrite dans les exemples précédents), l'intégralité de la phase aqueuse isolée lors de l'exemple 2 et 6,0 g (0,187 mole) de soufre. On porte le milieu à la température de 130°C et on maintient, sous agitation, le milieu à cette température pendant 6 heures. Après retour à la température ambiante, on dilue le milieu avec 50 ml de n-heptane, puis on sépare par décantation la phase aqueuse et la phase organique. La phase aqueuse est conservée afin d'être utilisée lors de la réaction décrite dans l'exemple 4. Après séchage de la phase organique sur sulfate de sodium puis filtration, on procède à l'évaporation sous pression réduite du n-heptane et on obtient 55,3 g d'un produit liquide, limpide, soluble dans les huiles minérales et synthétiques, dont la teneur en soufre est de 10,8% en masse et dont la teneur en azote est inférieure à 0,1% en masse.

### Exemple 4

Dans un réacteur permettant d'opérer sous pression, on introduit 50 g d'un mélange d'esters d'acide gras d'indice d'iode égal à 110 g d'iode pour 100 g de produit (identique à celui utilisé lors de la réaction décrite dans les exemples précédents), l'intégralité de la phase aqueuse isolée lors de l'exemple 3 et 6,0 g (0,187 mole) de soufre. On porte le milieu à la température de 130°C et on maintient, sous agitation, le milieu à cette température pendant 6 heures. Après retour à la température ambiante, on dilue le milieu avec 50 ml de n-heptane, puis on sépare par décantation la phase aqueuse et la phase organique. La phase aqueuse est conservée afin d'être utilisée lors de réactions ultérieures. Après séchage de la phase organique sur sulfate de sodium puis filtration, on procède à l'évaporation sous pression réduite du n-heptane et on obtient 53,8 g d'un produit liquide, limpide, soluble dans les huiles minérales et synthétiques, dont la teneur en soufre est de 11,0 % en masse et dont la teneur en azote est inférieure à 0,1% en masse.

### Exemple 5

Dans un réacteur permettant d'opérer sous pression, on introduit 50 g d'un mélange d'esters d'acide gras d'indice d'iode égal à 110 g d'iode pour 100 g de produit (identique à celui utilisé lors de la réaction décrite dans l'exemple 1), 5,1 g (0,083 mole) d'éthanolamine, 6,0 g (0,187 mole) de soufre et 45 g d'eau. On porte le milieu à la température de 130°C et on maintient, sous agitation, le milieu à cette température pendant 6 heures. Après retour à la température ambiante, on dilue le milieu avec 50 ml de n-heptane, puis on sépare par décantation la phase aqueuse et la phase organique. La phase aqueuse est conservée afin d'être utilisée lors de la réaction décrite dans l'exemple 6. Après séchage de la phase organique sur sulfate de sodium puis filtration, on procède à l'évaporation sous pression réduite du n-heptane et on obtient 54,5 g d'un produit liquide, limpide, soluble dans les huiles minérales et synthétiques, dont la teneur en soufre est de 11,0% en masse et dont la teneur en azote est inférieure à 0,1% en masse.

### Exemple 6

Dans un réacteur permettant d'opérer sous pression, on introduit 50 g d'un mélange d'esters d'acide gras d'indice d'iode égal à 110 g d'iode pour 100 g de produit (identique à celui utilisé lors de la réaction décrite dans l'exemple 1), l'intégralité de la phase aqueuse isolée lors de l'exemple 5 et 6,0 g (0,187 mole) de soufre. On porte le milieu à la température de 130°C et on maintient, sous agitation, le milieu à cette température pendant 6 heures. Après retour à la température ambiante, on dilue le milieu avec 50 ml de n-heptane, puis on sépare par décantation la phase aqueuse et la phase organique. La phase aqueuse est conservée afin d'être utilisée lors de la réaction décrite dans l'exemple 7. Après séchage de la phase organique sur sulfate de sodium puis filtration, on procède à l'évaporation sous pression réduite du n-heptane et on obtient 54,0 g d'un produit liquide, limpide, soluble dans les huiles minérales et synthétiques, dont la teneur en soufre est de 11,5% en masse et dont la teneur en azote est inférieure à 0,1% en masse

### Exemple 7

Dans un réacteur permettant d'opérer sous pression, on introduit 50 g d'un mélange d'esters d'acide gras d'indice d'iode égal à 110 g d'iode pour 100 g de produit (identique à celui utilisé lors de la réaction décrite dans les exemples précédents), l'intégralité de la phase aqueuse isolée lors de l'exemple 6 et 6,0 g (0,187 mole) de soufre. On porte le milieu à la température de 130°C et on maintient, sous agitation, le milieu à cette température pendant 6 heures. Après retour à la température ambiante, on dilue le milieu avec 50 ml de n-heptane, puis on sépare par décantation la phase aqueuse et la phase organique. La phase aqueuse est conservée afin d'être utilisée lors de réactions ultérieures Après séchage de la phase organique sur sulfate de sodium puis filtration, on procède à l'évaporation sous pression réduite du n-heptane et on obtient 53,0 g d'un produit liquide, limpide, soluble dans les huiles minérales et synthétiques, dont la teneur en soufre est de 11,0% en masse et dont la teneur en azote est inférieure à 0,1% en masse.

### Exemple 8

Dans un réacteur permettant d'opérer sous pression, on introduit 50 g d'un mélange d'esters d'acide gras d'indice d'iode égal à 110 g d'iode pour 100 g de produit (identique à celui utilisé lors de la réaction décrite dans les exemples précédents), l'intégralité de la phase aqueuse isolée lors de l'exemple 7 et 6,0 g (0,187 mole) de soufre. On porte le milieu à la température de 130°C et on maintient, sous agitation, le milieu à cette température pendant 6 heures. Après retour à la température ambiante, on dilue le milieu avec 50 ml de n-heptane, puis on sépare par décantation la phase aqueuse et la phase organique. La phase aqueuse est conservée afin d'être utilisée lors de réactions ultérieures. Après séchage de la phase organique sur sulfate de sodium puis filtration, on procède à l'évaporation sous pression réduite du n-heptane et on obtient 54,2 g d'un produit liquide, limpide, soluble dans les huiles minérales et synthétiques, dont la teneur en soufre est de 11,4% en masse et dont la teneur en azote est inférieure à 0,1% en masse.

### Exemple 9

Dans un réacteur permettant d'opérer sous pression, on introduit 50 g d'un mélange d'esters d'acide gras d'indice d'iode égal à 110 g d'iode pour 100 g de produit (identique à celui utilisé lors de la réaction décrite dans l'exemple 1), 5,0 g (0,027 mole) de carbonate de guanidine, 6,0 g (0,187 mole) de soufre et 45 g d'eau. On porte le milieu à la température de 130°C et on maintient, sous agitation, le milieu à cette température pendant 6 heures. Après retour à la température ambiante, on dilue le milieu avec 50 ml de n-heptane, puis on sépare par décantation la phase aqueuse et la phase organique. La phase aqueuse est conservée afin d'être utilisée lors de la réaction décrite dans l'exemple 10. Après séchage de la phase organique sur sulfate de sodium puis filtration, on procède à l'évaporation sous pression réduite du n-heptane et on obtient 52,0 g d'un produit liquide, limpide, soluble dans les huiles minérales et synthétiques, dont la teneur en soufre est de 10,9% en masse et dont la teneur en azote est inférieure à 0,1% en masse.

### Exemple 10

Dans un réacteur permettant d'opérer sous pression, on introduit 50 g d'un mélange d'esters d'acide gras d'indice d'iode égal à 110 g d'iode pour 100 g de produit (identique à celui utilisé lors de la réaction décrite dans l'exemple 1), l'intégralité de la phase aqueuse isolée lors de l'exemple 9 et 6,0 g (0,187 mole) de soufre. On porte le milieu à la température de 130°C et on maintient, sous agitation, le milieu à cette température pendant 6 heures. Après retour à la température ambiante, on dilue le milieu avec 50 ml de n-heptane, puis on sépare par décantation la phase aqueuse et la phase organique. La phase aqueuse est conservée afin d'être utilisée lors de la réaction décrite dans l'exemple 11. Après séchage de la phase organique sur sulfate de sodium puis filtration, on procède à l'évaporation sous pression réduite du n-heptane et on obtient 54,0 g d'un produit liquide, limpide, soluble dans les huiles minérales et synthétiques, dont la teneur en soufre est de 11,5% en masse et dont la teneur en azote est inférieure à 0,1% en masse.

### Exemple 11

Dans un réacteur permettant d'opérer sous pression, on introduit 50 g d'un mélange d'esters d'acide gras d'indice d'iode égal à 110 g d'iode pour 100 g de produit (identique à celui utilisé lors de la réaction décrite dans les exemples précédents), l'intégralité de la phase aqueuse isolée lors de l'exemple 10 et 6,0 g (0,187 mole) de soufre. On porte le milieu à la température de 130°C et on maintient, sous agitation, le milieu à cette température pendant 6 heures. Après retour à la température ambiante, on dilue le milieu avec 50 ml de n-heptane, puis on sépare par décantation la phase aqueuse et la phase organique. La phase aqueuse est conservée afin d'être utilisée lors de réactions ultérieures. Après séchage de la phase organique sur sulfate de sodium puis filtration, on procède à l'évaporation sous pression réduite du n-heptane et on obtient 53,0 g d'un produit liquide, limpide, soluble dans les huiles minérales et synthétiques, dont la teneur en soufre est de 11,1% en masse et dont la teneur en azote est inférieure à 0,1% en masse.

### Exemple 12

Dans un réacteur permettant d'opérer sous pression, on introduit 50 g d'un mélange d'esters d'acide gras d'indice d'iode égal à 110 g d'iode pour 100 g de produit (identique à celui utilisé lors de la réaction décrite dans l'exemple 1), 7,1 g (0,083 mole) de pipéridine, 6,0 g (0,187 mole) de soufre et 45 g d'eau. On porte le milieu à la température de 130°C et on maintient, sous agitation, le milieu à cette température pendant 6 heures. Après retour à la température ambiante, on dilue le milieu avec 50 ml de n-heptane, puis on sépare par décantation la phase aqueuse et la phase organique. La phase aqueuse est conservée afin d'être utilisée lors de la réaction décrite dans l'exemple 13. Après séchage de la phase organique sur sulfate de sodium puis filtration, on procède à l'évaporation sous pression réduite du n-heptane et on obtient 53,5 g d'un produit liquide, limpide, soluble dans les huiles minérales et synthétiques, dont la teneur en soufre est de 8,9% en masse et dont la teneur en azote est inférieure à 0,1% en masse.

### Exemple 13

Dans un réacteur permettant d'opérer sous pression, on introduit 50 g d'un mélange d'esters d'acide gras d'indice d'iode égal à 110 g d'iode pour 100 g de produit (identique à celui utilisé lors de la réaction décrite dans les exemples précédents), l'intégralité de la phase aqueuse isolée lors de l'exemple 12 et 6,0 g (0,187 mole) de soufre. On porte le milieu à la température de 130°C et on maintient, sous agitation, le milieu à cette température pendant 6 heures. Après retour à la température ambiante, on dilue le milieu avec 50 ml de n-heptane, puis on sépare par décantation la phase aqueuse et la phase organique. La phase aqueuse est conservée afin d'être utilisée lors de réactions ultérieures. Après séchage de la phase organique sur sulfate de sodium puis filtration, on procède à l'évaporation sous pression réduite du n-heptane et on obtient 53,0 g d'un produit liquide, limpide, soluble dans les huiles minérales et synthétiques, dont la teneur en soufre est de 8,9% en masse et dont la teneur en azote est inférieure à 0,1% en masse.

### Exemple 14

Dans un réacteur permettant d'opérer sous pression, on introduit 50 g d'un mélange d'esters d'acide gras d'indice d'iode égal à 110 g d'iode pour 100 g de produit (identique à celui utilisé lors de la réaction décrite dans l'exemple 1), 5,18g (0,054 mole) de pipérazine, 6,0 g (0.187 mole) de soufre et 45 g d'eau. On porte le milieu à la température de 130°C et on maintient, sous agitation, le milieu à cette température pendant 6 heures. Après retour à la température ambiante, on dilue le milieu avec 50 ml de n-heptane, puis on sépare par décantation la phase aqueuse et la phase organique. La phase aqueuse est conservée afin d'être utilisée lors de réactions ultérieures. Après séchage de la phase organique sur sulfate de sodium puis filtration, on procède à l'évaporation sous pression réduite du n-heptane et on obtient 53,9g d'un produit liquide, limpide, soluble dans les huiles minérales et synthétiques, dont la teneur en soufre est de 8,9% en masse et dont la teneur en azote est inférieure à 0,1% en masse.

### Exemple 15

Dans un réacteur permettant d'opérer sous pression, on introduit 50 g d'un mélange d'esters d'acide gras d'indice d'iode égal à 110 g d'iode pour 100 g de produit (identique à celui utilisé lors de la réaction décrite dans les exemples précédents), l'intégralité de la phase aqueuse isolée lors de l'exemple 13 et 6,0 g (0,187 mole) de soufre. On porte le milieu à la température de 130°C et on maintient, sous agitation, le milieu à cette température pendant 6 heures. Après retour à la température ambiante, on dilue le milieu avec 50 ml de n-heptane, puis on sépare par décantation la phase aqueuse et la phase organique. La phase aqueuse est conservée afin d'être utilisée lors de réactions ultérieures. Après séchage de la phase organique sur sulfate de sodium puis filtration, on procède à l'évaporation sous pression réduite du n-heptane et on obtient 52,7 g d'un produit liquide, limpide, soluble dans les huiles minérales et synthétiques, dont la teneur en soufre est de 8,8% en masse et dont la teneur en azote est inférieure à 0,1% en masse.

## Revendications

1. Procédé de sulfuration d'une composition comprenant au moins un ester d'acide monocarboxylique à chaîne aliphatique de 3 à 30 atomes de carbone comportant au moins une insaturation éthylénique et de monoalcool ou de polyol, **caractérisé en ce que** l'on fait réagir ladite composition avec du soufre élémentaire en présence d'un composé à fonction amine hydrosoluble et en présence d'eau.

2. Procédé selon la revendication 1, **caractérisé en ce que** ladite composition comprend au moins un ester insaturé formé entre au moins un acide monocarboxylique à chaîne aliphatique de 12 à 22 atomes de carbone et comportant au moins une insaturation éthylénique, et au moins un composé hydroxylé choisi parmi les monoalccols aliphatiques de 1 12 atomes de carbone et les polyols aliphatiques de 2 à 6 atomes de carbone.

3. Procédé selon l'une des revendications 1 et 2, **caractérisé en ce que** ledit composé à fonction amine est choisi parmi les alcanolamines, la morpholine et ses dérivés, la pipéridine, la pipérazine et le carbonate de guanidine.

4. Procédé selon l'une des revendications 1 à 3, **caractérisé en ce que** l'on met en jeu une proportion de soufre élémentaire allant jusqu'à environ 6 moles par insaturation éthylénique de la composition d'ester gras insaturé de départ.

5. Procédé selon l'une des revendications 1 à 4, **caractérisé en ce que** l'on met en jeu une proportion de composé à fonction amine de 0,1 à 4 moles par mole de soufre élémentaire.

6. Procédé selon l'une des revendications 1 à 5, **caractérisé en ce que** l'on met en jeu une proportion d'eau allant jusqu'à 20 moles par insaturation éthylénique de la composition d'ester gras insaturé de départ.

7. Procédé selon l'une des revendications 1 à 6, **caractérisé en ce que** la réaction est effectuée à une température de 5 à 200°C.

8. Procédé selon l'une des revendications 1 à 7, **caractérisé en ce que**, en fin de réaction, on sépare la composition sulfurée obtenue et une phase aqueuse contenant au moins la majeure partie du composé à fonction amine mis en jeu.

9. Procédé selon la revendication 8, **caractérisé en ce que** l'on effectue une nouvelle réaction de sulfuration en introduisant une nouvelle quantité de composition d'ester gras insaturé et une nouvelle quantité de soufre élémentaire au contact de ladite phase aqueuse contenant le composé à fonction amine séparée précédemment.

10. Procédé selon la revendication 9, **caractérisé en ce que** l'on effectue au moins trois réactions successives.

11. Procédé selon l'une des revendications 1 à 10, **caractérisé en ce que** ladite composition consiste essentiellement en un mélange d'esters d'acides gras de glycérol dans lesquels le glycérol a un, deux ou trois groupement(s) hydroxyle(s) estérifié(s) par au moins un acide monocarboxylique aliphatique dont au moins une partie présente au moins une insaturation éthylénique.

12. Procédé selon la revendication 11, **caractérisé en ce que** ladite composition résulte de la transestérification d'une huile ou graisse naturelle au moyen d'au moins un monoalcool aliphatique et 1 à 12 atomes de carbone.

13. Procédé selon l'une des revendications 1 à 10, **caractérisé en ce que** ladite composition consiste essentiellement en au moins un ester synthétisé par estérification entre un acide monocarboxylique à chaîne aliphatique éthyléniquement insaturée et un monoalcool ou un polyol aliphatique.

14. Procédé selon l'une des revendications 1 à 10, **caractérisé en ce que** ladite composition consiste essentiellement en au moins un ester synthétisé par transestérification entre d'une part un ester d'acide monocarboxylique à chaîne aliphatique éthyléniquement insaturée et de monoalcool ou de polyol aliphatique, et d'autre part un monoalcool ou un polyol différent.

## Patentansprüche

1. Verfahren zur Schwefelung einer Zusammensetzung, die wenigstens einen Monocarboxylsäureester mit aliphatischer Kette von 3-30 Kohlenstoffatomen, die wenigstens eine ethylenische Unsättigung aufweist, und Monoalkohol oder Polyol umfasst, **dadurch gekennzeichnet, dass** man diese Zusammensetzung mit elementarem Schwefel in Gegenwart einer Verbindung mit wasserlöslicher Aminfunktion und in Gegenwart von Wasser reagieren lässt.

2. Verfahren nach Anspruch 1, **dadurch gekennzeichnet, dass** diese Zusammensetzung wenigstens einen ungesättigten Ester umfasst, der zwischen wenigstens einer Monocarboxylsäure mit aliphatischer Kette von 12-22 Kohlenstoffatomen und die wenigstens eine ethylenische Unsättigung aufweist, und wenigstens einer Hydroxylverbindung gebildet ist, die unter den aliphatischen Monoalkoholen mit 1-12 Kohlenstoffatomen und den aliphatischen Polyolen mit 2-6 Kohlenstoffatomen gewählt ist.

3. Verfahren nach einem der Ansprüche 1 und 2, **dadurch gekennzeichnet, dass** diese Verbindung mit Aminfunktion unter den Alkanolaminen, Morpholin und seinen Derivaten, Piperidin, Piperazin und Guanidincarbonat gewählt ist.

4. Verfahren nach einem der Ansprüche 1 bis 3, **dadurch gekennzeichnet, dass** man einen Anteil elementaren Schwefels einsetzt, der bis zu etwa 6 mol pro ethylenischer Unsättigung der ungesättigten Ausgangsfettesterzusammensetzung geht.

5. Verfahren nach einem der Ansprüche 1 bis 4, **dadurch gekennzeichnet, dass** man einen Anteil mit Aminfunktion von 0,1 bis 4 mol pro mol elementaren Schwefel einsetzt.

6. Verfahren nach einem der Ansprüche 1 bis 5, **dadurch gekennzeichnet, dass** man einen Wasseranteil einsetzt, der bis zu 20 mol pro ethylenischer Unsättigung der ungesättigten Ausgangsfettesterzusammensetzung geht.

7. Verfahren nach einem der Ansprüche 1 bis 6, **dadurch gekennzeichnet, dass** die Reaktion bei einer Temperatur von 5 bis 200 °C durchgeführt wird.

8. Verfahren nach einem der Ansprüche 1 bis 7, **dadurch gekennzeichnet, dass** man am Ende der Reaktion die erhaltene geschwefelte Zusammensetzung und eine wässrige Phase trennt, die wenigstens den größeren Teil der eingesetzten Verbindung mit Aminfunktion enthält.

9. Verfahren nach Anspruch 8, **dadurch gekennzeichnet, dass** man eine neue Schwefelungsreaktion durchführt, indem man eine neue Menge der ungesättigten Fettesterzusammensetzung und eine neue Menge elementaren Schwefels in Kontakt mit der wässrigen Phase in Kontakt bringt, die die Verbindung mit Aminfunktion enthält, die vorher getrennt wurde.

10. Verfahren nach Anspruch 9, **dadurch gekennzeichnet, dass** man wenigstens drei aufeinanderfolgende Reaktionen durchführt.

11. Verfahren nach einem der Ansprüche 1 bis 10, **dadurch gekennzeichnet, dass** die Zusammensetzung im wesentlichen in einer Mischung von Fettsäureestem von Glycerol besteht, bei denen Glycerol 1, 2, oder 3 Hydroxylgruppe(n) hat, die durch wenigstens eine aliphatische Monocarboxylsäure esterifiziert ist (sind), wovon wenigstens ein Teil wenigstens eine ethylenische Unsättigung aufweist.

12. Verfahren nach Anspruch 11, **dadurch gekennzeichnet, dass** die Zusammensetzung aus der Transesterifizierung eines natürlichen Öls oder Fetts mittels wenigstens eines Monoalkohols resultiert, der aliphatisch ist und 1 bis 12 Kohlenstoffatome hat.

13. Verfahren nach einem der Ansprüche 1 bis 10, **dadurch gekennzeichnet, dass** die Zusammensetzung im wesentlichen aus wenigstens einem durch Esterifizierung zwischen einer Monocarboxylsäure mit aliphatisch ethylenisch ungesättigter Kette und einem Monoalkohol oder einem aliphatischen Polyol synthetisiert ist.

14. Verfahren nach einem der Ansprüche 1 bis 10, **dadurch gekennzeichnet, dass** die Zusammensetzung im wesentlichen aus wenigstens einem durch Transesterifizierung zwischen einerseits einem Monocarboxylsäureester mit aliphatischer ethylenisch ungesättigter Kette und einem Monoalkohol oder aliphatischem Polyol und andererseits einem Monoalkohol oder einem unterschiedlichen Polyol synthetisiert ist.

## Claims

1. A process for sulphurizing a composition that comprises at least one ester of a monocarboxylic acid with an aliphatic chain of 3 to 30 carbon atoms and containing at least one ethylenic unsaturation and of a monoalcohol or polyol, **characterized in that** said composition is reacted with elemental sulphur in the presence of a water-soluble compound with amine group and in the presence of water.

2. A process according to claim 1, **characterized in that** said composition comprises at least one unsaturated ester that is formed between at least one monocarboxylic acid with an aliphatic chain of 12 to 22 carbon atoms and containing at least one ethylenic unsaturation, and at least one hydroxylated compound selected from among the aliphatic monoalcohols with 1 to 12 carbon atoms and the aliphatic polyols with 2 to 6 carbon atoms.

3. A process according to one of claims 1 and 2, **characterized in that** said compound with an amine group is selected from among alkanol amines, morpholine and its derivatives, piperidine, piperazine, and guanidine carbonate.

4. A process according to one of claims 1 to 3, **characterized in that** a proportion of elemental sulphur of up to about 6 mol per ethylenic unsaturation of the initial composition of unsaturated fatty ester is used.

5. A process according to one of claims 1 to 4, **characterized in that** a proportion 0.1 to 4 mol of compound with an amine group per mol of elemental sulphur is used.

6. A process according to one of claims 1 to 5, 0.1 to 4 mol a proportion of water of up to 20 mol per ethylenic unsaturation of the initial composition of unsaturated fatty ester is used.

7. A process according to one of claims 1 to 6, **characterized in that** the reaction is carried out at a temperature of 5 to 200°C.

8. A process according to one of claims 1 to 7, **characterized in that** at the end of the reaction, the sulphur-containing composition that is obtained and an aqueous phase that contains at least the majority of the compound with an amine group that is used are separated.

9. A process according to claim 8, **characterized in that** a new sulphurizing reaction is carried out by introducing a new amount of unsaturated fatty ester composition and a new amount of elemental sulphur into contact with said aqueous phase containing the compound with an amine group that was separated previously.

10. A process according to claim 9, **characterized in that** at least three successive reactions are carried out.

11. A process according to one of claims 1 to 10, **characterized in that** said composition consists essentially of a mixture of fatty acid esters of glycerol in which the glycerol has one, two, or three hydroxylated group(s) that are esterified by at least one aliphatic monocarboxylic acid, of which at least a portion contains at least one ethylenic unsaturation.

12. A process according to claim 11, **characterized in that** said composition results from the transesterification of a natural oil or fat with at least one aliphatic monoalcohol having 1 to 12 carbon atoms.

13. A process according to one of claims 1 to 10, **characterized in that** said composition consists essentially of at least one ester that is synthesized by esterification between a monocarboxylic acid with an ethylenically unsaturated aliphatic chain and an aliphatic monoalcohol or polyol.

14. A process according to one of claims 1 to 10, **characterized in that** said composition consists essentially of at least one ester that is synthesized by transesterification between, on the one hand, an ester of a monocarboxylic acid with an ethylenically unsaturated aliphatic chain and an aliphatic monoalcohol or polyol, and, on the other hand, a different monoalcohol or polyol.
